# EUROPEAN PATENT APPLICATION

(11) **EP 4 389 809 A1**
(43) Date of publication of application: **26.06.2024**
(21) Application number: 22216286.9
(22) Date of filing: 23.12.2022
(51) Int. Cl.: C08J 11/16, C08J 11/24

(54) **APPARATUS AND METHOD FOR DEPOLYMERIZING POLYCONDENSATION POLYMERS**

(71) Applicant: Sipchem InnoVent SA, 1095 Lutry (CH)
(72) Inventor: MARTIN, Cyril, 1772 Grolley (CH); ARPIN, Thierry, 6984 Pura (CH)
(74) Representative: Hepp Wenger Ryffel AG

(57) **Abstract**

A method for depolymerizing a condensation polymer into its monomeric components or derivatives thereof, the method comprising the steps: a) Providing a solid starting material containing at least one condensation polymer to be depolymerized; b) providing a depolymerization agent for said condensation polymer, wherein said depolymerization agent is a substantially anhydrous solid; c) providing a polyhydric alcohol having at least three hydroxyl groups per molecule; d) adding the starting material, the depolymerization agent and the polyhydric alcohol to a reactor vessel to obtain a reaction mixture; e) depolymerizing the condensation polymer by kneading and/or mixing and/or conveying and/or recycling the reaction mixture in the reactor vessel; and f) separating at least one of the monomers of the condensation polymer to be depolymerized, or derivatives of said monomers, from the depolymerization agent and from the polyhydric alcohol during and/or after depolymerization step e).

## Description

The present invention relates to a method and an apparatus for depolymerizing a polycondensation polymer into its monomeric components or derivatives thereof. The present invention also relates to the use of an apparatus as disclosed herein for performing a method as disclosed herein.

The global production of plastics increased from 2 million tonnes in 1950 to more than 390 million tonnes in 2021, with a market growth rate of >5% per annum. Projections are that plastics production may increase up to more than 1200 million tonnes in 2050. At the same time, there is an increasing demand to lower greenhouse gas emissions, reduce the accumulation of plastics in nature, and transition towards a more sustainable circular economy. Due to the massive amount of carbon present in synthetic polymers, the reuse and recycling of polymers to the greatest possible extent supports the objectives to become less dependent on finite fossil resources and reduce the accumulation of plastics in nature. The class of polycondensation polymers contains some of the most widely used polymers today, for example, in adhesives, coatings, engineering plastics, fibers, textiles, films, beverage bottles, food containers, automotive parts, and many high-performance polymers.

Recycling of synthetic polymers can be achieved, for example, by mechanical comminution and primary shaping into a new product. However, this cannot be continued indefinitely as the quality of the product will deteriorate with every recycling cycle either due to degradation or the accumulation of contaminants. In addition, mechanically recycled plastics are often not approved in certain applications, such as food packaging. Moreover, synthetic polymers are frequently used in combination with further polymers and/or non-polymeric materials. Such composite materials comprising a mixtures of materials are inherently difficult to recycle due to the difficulty in separating the different materials from each other. This currently imposes limits to the percentage of synthetic polymers that can be recycled and, as a consequence, composite materials are typically recycled only thermally on a large scale or filled into landfills. This means, however, that the material is lost from the material cycle.

In order to increase the reuse of resources and circumvent the loss of value, back to monomer recycling enables the use of plastics that are not or no longer suitable for mechanical recycling. Depolymerization of synthetic polymers to their constituent monomeric building blocks allows repolymerisation into high-value products.

Several processes are known from the prior art for recovering the constituent monomeric building blocks, i.e. the monomeric components, from polycondensate-containing waste. For example, EP 0 875 504 A1 discloses a process for the depolymerization of polyamides into its monomeric components in the presence of water by means of an alkali or alkaline-earth metal compound at a pressure of between 0.2 and 2.0 MPa. WO 2021/180432 A1 describes a method for recycling waste essentially containing polyalkylene terephthalate and additionally containing polycondensate, such as polyamide 6.6, in a continuous process by coupling acidic and alkaline depolymerizations. Alkaline depolymerization is performed by using NaOH, water and the alkylene glycol formed as a product of the polyalkylene terephthalate depolymerization. Acidic depolymerization of polyamide 6.6 is performed in boiling aqueous hydrochloric acid. However, these processes work either with high pressures and/or with high temperatures and require the addition of a large amount of water, which makes these processes rather resource-intensive and uneconomical.

It is thus an object of the present invention to remedy these and other disadvantages of the state of the art and in particular to provide a method and an apparatus for the depolymerization of polycondensation polymers, wherein the method and the apparatus require less solvents, preferably no solvents, and are more efficient and cost effective.

The object is achieved by a method for depolymerizing a condensation polymer into its monomeric components or derivatives thereof, an apparatus for depolymerizing condensation polymers, and the use of such an apparatus for performing such a method, pursuant to the independent claims. Advantageous embodiments are subject to the dependent claims.

The object is in particular achieved by a method for depolymerizing a condensation polymer into its monomeric components or derivatives thereof, the method comprising the following steps a) through f):
In step a), a solid starting material containing at least one condensation polymer to be depolymerized is provided.

In step b) a depolymerization agent for said condensation polymer is provided. The depolymerization agent is a substantially anhydrous solid. In the context of the present specification, the term "solid" refers to the aggregate state of the depolymerization agent at room temperature, i.e. at approx. 20-25 °C.

In step c), a polyhydric alcohol having at least three hydroxyl groups per molecule is provided.

In step d), the starting material, the depolymerization agent and the polyhydric alcohol are added to a reactor vessel to obtain a reaction mixture. In particular, the depolymerization agent is added such that the stoichiometric ratio of depolymerization agent to starting material is at least 2, preferably 2.2, based on the repeating unit of the condensation polymer to be depolymerized. In particular, the polyhydric alcohol is added in a stoichiometric ratio of polyhydric alcohol to starting material of at least 1.5, preferably 1.8, per hydroxyl group in the polyhydric alcohol and based on the repeating unit of the condensation polymer to be depolymerized. The aforementioned ratios have been found to be particularly suitable in the context of the present invention for achieving high throughput rates and high quality of the obtained recycled products.

In step e), the condensation polymer is depolymerized by at least one of kneading, mixing, conveying, and recycling the reaction mixture in the reactor vessel. This way, a product mixture is obtained, the product mixture comprising the depolymerization agent, the polyhydric alcohol, the monomeric components, or derivatives thereof, of the condensation polymer as well as any residual starting material and condensation polymer.

In step f), at least one of the monomeric components of the condensation polymer, or derivatives of said monomeric components, is separated from the depolymerization agent and from the polyhydric alcohol during the depolymerization step e). In addition or alternatively, separation of at least one of the monomeric components, or derivatives thereof, of the condensation polymer is separated from the depolymerization agent and from the polyhydric alcohol after depolymerization step e).

In the context of the present specification, the term "polycondensation polymer" refers to a polymer formed by condensation reactions between two kinds of bi- or multifunctional monomers, i.e. monomeric components, involving the formation of a small molecule as leaving group. Notably, the term polycondensation polymer as used herein also refers to polyamides which are formed by ring-opening polymerization, such as in particular polyamide 6. A "derivative of a monomeric component" is understood to be a molecule which differs structurally from the monomer used in the respective polymerization reaction but can be converted into it. For example, carboxylates obtained from the method of depolymerization disclosed herein may be acidified to obtain the corresponding carboxylic acid monomer. Amines may be phosgenated to obtain the corresponding isocyanate monomer used in the formation of polyurethanes, to give another example of a derivative of a monomeric component.

It has now been surprisingly found that the use of polyhydric alcohols having at least three hydroxyl groups per molecule leads to a particularly efficient depolymerization of polycondensation polymers without the use of solvents, in particular water. The substantially anhydrous depolymerization agent can easily be separated from the product mixture by filtration. Typically, at least one of the monomeric components resulting from the depolymerization can be easily separated from the product mixture in gaseous form, in particular by means of distillation, vacuum distillation, or in the gas flow of a carrier gas. The method disclosed herein has the further advantage that the decomposition of the condensation polymers takes place at comparatively low temperatures and is thus particularly energy-efficient and cost-effective. Moreover, the method disclosed herein tolerates the presence of further polymers, such as polyethylene, polypropylene, ethylene-vinyl acetate copolymer (EVA), ethylene-vinyl alcohol copolymer (EVOH), polyvinyl alcohol (PVOH) and/or polystyrene, which are frequently comprised in polycondensate-containing composite materials.

Specific condensation polymers which may be depolymerized in accordance with the present invention include polyesters, polyamides, polycarbonates, and polyurethanes.

Polyesters are obtainable by the condensation of a dicarboxylic acid and a dihydric alcohol and are characterized by a repeating unit of the following formula (1a):

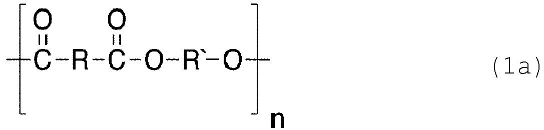

In a preferred embodiment of the method disclosed herein, the polyester is at least one of polyethylene terephthalate, polybutylene terephthalate, polyethylene naphthalate, polycyclo-hexylenedimethylene terephthalate, polytrimethylene terephthalate, polybutylene succinate, polybutylene adipate terephthalate, and copolyesters of the aforementioned polyesters. Even more preferably, said polyester is at least one of polyethylene terephthalate, polybutylene terephthalate, polyethylene terephthalate/polybutylene terephthalate copolymer, polyethylene terephthalate copolymer, and polybutylene terephthalate copolymer.

In the context of the present invention, the term "polyester" is understood to also mean biopolyesters, in particular polylactic acid. Polylactic acid is formally obtainable by condensation of lactic acid with loss of water and characterized by a repeating unit of the following formula (1b):

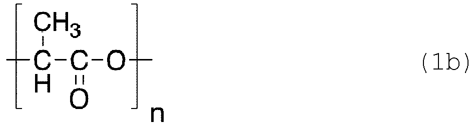

Another condensation polymer which may be depolymerized in accordance with the present invention belongs to the class of polyamides. Polyamides are obtainable by the condensation of a dicarboxylic acid and an alkylene diamine and are characterized by a repeating unit of the following formula (2a):

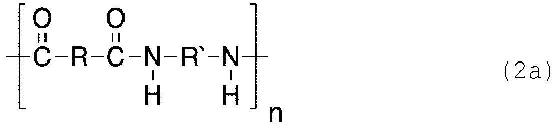

Alternatively, polyamides may also be obtained by the head-to-tail condensation of an amino carboxylic acid or ring-opening of the corresponding lactam. In this case, the polyamides are characterized by a repeating unit of the following formula (2b):

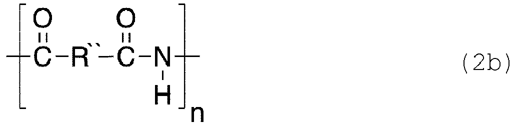

In a preferred embodiment of the method disclosed herein, the polyamide is at least one of polyamide 6, polyamide 6.9, polyamide 4.6, polyamide 11, polyamide 12, polyamide 10.10, polyamide 6.6, and fully or partially aromatic polyphthalamide. The monomeric component in the case of polyamide 6 is caprolactam (IU-PAC: Azepan-2-one). In the case of polyamide 6.6 the monomeric components are hexamethylene diamine and adipic acid.

Another condensation polymer which may be depolymerized in accordance with the present invention belongs to the class of polycarbonates. Polycarbonates are obtainable, for example, by the reaction of phosgene and a dihydric alcohol and are characterized by a repeating unit having the following formula (3):

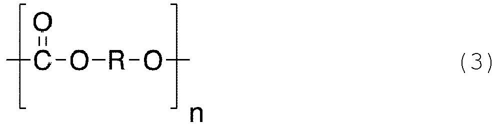

In a preferred embodiment of the method disclosed herein, the polycarbonate is at least one of Bisphenol A (BPA)-based polycarbonate and poly(propylene carbonate).

Another condensation polymer which may be depolymerized in accordance with the present invention belongs to the class of polyurethane. Polyurethanes are obtainable by the reaction of a diisocyanate and a hydroxyl-rich compound containing at least two hydroxyl groups. The amines obtained in the depolymerization are derivatives of the monomeric component and can, in principle, be converted into isocynates, i.e. the monomeric component, as is known to the person skilled in the art. Polyurethanes are characterized by a repeating unit of the following formula (4):

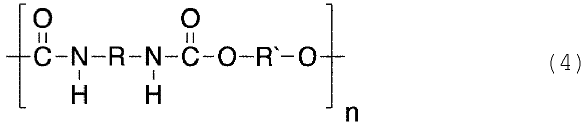

In each of the formulas (1)-(4) above, R, R' and R'' are divalent organic radicals.

In a preferred embodiment of the method disclosed herein, no additional solvent is added to the reaction mixture prior to step f). In particular, no alkylene glycol and no water are added to the reaction mixture prior to step f). This eliminates the need for any separation or purification of the solvent, which helps to reduce the dimensions and cost of the apparatus, and in particular means that the apparatus used to carry out the method can have fewer and smaller vessels.

In a particularly preferred embodiment of the method disclosed herein, no additional solvent is added to the product mixture until after step f). In particular, no alkylene glycol and no water are added to the product mixture until after step f). At this point, at least one of the monomeric components or derivatives thereof has already been partially and preferably largely removed from the product mixture, which is why any added solvent no longer interferes with the efficient or effective separation of said monomeric components from the product mixture.

Suitable depolymerization agents useful in the method disclosed herein are alkali metal oxides or alkaline-earth metal oxides, alkali metal hydroxides or alkaline-earth metal hydroxides, and alkali metal carbonates or alkaline-earth metal carbonates, or mixtures of the aforementioned compounds. Examples of such compounds are sodium oxide, potassium oxide, magnesium oxide, calcium oxide, sodium ethoxide, sodium hydroxide, potassium hydroxide, calcium hydroxide, magnesium hydroxide, sodium carbonate, potassium carbonate, magnesium carbonate or a mixture thereof.

In a preferred embodiment of the method disclosed herein, the depolymerization agent is at least one compound selected from the group consisting of sodium hydroxide, potassium hydroxide, calcium hydroxide, magnesium hydroxide, sodium ethoxide, sodium carbonate, and hydrosilanes. The aforementioned compounds are all generally readily available at low cost, which makes the method particularly cost-effective.

It is particularly preferred that the depolymerization agent used in the method disclosed herein is sodium hydroxide, also known as "lye" or "caustic soda". Sodium hydroxide is strongly alkaline (pKₐ approx. 15.7) and thus a highly active catalyst in addition to being generally readily available, cheap and recyclable. Sodium hydroxide absorbs moisture and forms a series of hydrates NaOH·nH₂O. The commercially available "sodium hydroxide" is often the monohydrate NaOH·H₂O, which is still considered to be a "substantially anhydrous solid" in the context of the present specification, despite the water bound therein.

In a preferred embodiment of the method disclosed herein, the depolymerization agent is not a transition metal compound. This means that the reaction mixture is substantially free of transition metal compounds. Transition metal compounds or complexes are often expensive and difficult to handle, for example, due to their sensitivity to high temperatures, water or oxygen. By avoiding such compounds or complexes containing transition metals, the process can consequently be carried out less complex and cheaper. In particular, the depolymerization agent is not zinc acetate. This means that the reaction mixture is substantially free of zinc acetate. When acetates such as zinc acetate are used, there is a risk that acetic acid formed during the depolymerization reaction, which is relatively volatile and odorous, can escape from the reaction vessel and cause damage, which can be avoided by not using zinc acetate. Accordingly, the equipment used does not need to be separately protected against the escape of acetic acid vapours, which reduces the design effort and thus also the costs.

In a preferred embodiment of the method disclosed herein, the polyhydric alcohol has between three and five hydroxyl groups per molecule. Preferably, the polyhydric alcohol is selected from the group consisting of glycerol, diglycerol, triglycerol, pentaerythritol, dipentaerythritol, and sorbitol. The aforementioned compounds have a relatively large number of hydroxyl groups available for transesterification while having a relatively small molecular size or molecular weight, respectively. As a result, despite the transesterification reactions, there is initially only a slow decrease in viscosity in the reaction mixture during depolymerization. This allows the harsh mechanical processing of the reaction mixture by the mixing, kneading, conveying and/or recirculation processes in the reactor vessel to contribute to the decomposition of the polycondensate-containing waste over a large proportion of the total depolymerization time, which means that the depolymerization reaction as a whole can run more completely in a shorter period of time.

In a preferred embodiment of the method disclosed herein, the reaction mixture is one or both of heated and cooled to a temperature above the glass transition temperature (T_{g}) of the condensation polymer to be depolymerized and below its melting temperature (Tₘ). Heating above the glass transition temperature causes the polymer chains to become mobile and significantly facilitates and accelerates the depolymerization reaction. On the other hand, the reaction mixture should not rise to temperatures above the melting temperature of the polymer in question, as this would significantly reduce the viscosity of the reaction mixture, i.e. render it thinner (more flowable). Within the scope of the present invention, it was surprisingly found that relatively harsh mechanical processing, which is made possible by the kneading, mixing, conveying or recirculation processes of a reaction mixture at relatively low temperatures in the reaction vessel, in combination with the reactants used according to the invention, results in a particularly fast depolymerization reaction as well as high conversions with a low time requirement.

In case the starting material contains several polycondensation polymers with different glass transition and melting temperatures, the reaction mixture is preferably tempered to a temperature above the glass transition temperature (T_{g}) of all of the condensation polymers to be depolymerized and a temperature at or below the lowest melting temperature (Tₘ) of the polycondensation polymers to be depolymerized. This way, the beneficial effects described above are also achieved even in the case the starting material comprises a mixture of different polycondensation polymers.

Preferably, the reaction mixture is heated and/or cooled to a temperature between 60 °C and 250 °C. More preferably, the reaction mixture is heated and/or cooled to a temperature between 120 °C and 160 °C. The latter temperature range is significantly lower than is known from the relevant prior art and, in addition to maintaining a relatively large viscosity, i.e. thick liquid (less flowable), of the reaction mixture, thus also allows savings in the energy required for heating.

Heating and cooling may, in particular, be accomplished via means for tempering the reactor vessel. For example, the reactor vessel may be tempered by using a fluid and means for heat transfer or heat dissipation to and/or from the reactor vessel.

By way of another example, the reactor vessel may be tempered by using electromagnetic radiation, in particular microwaves. Microwave is a form of electromagnetic radiation with wavelengths ranging from about one meter to one millimeter corresponding to frequencies between 300 MHz and 300 GHz, respectively. The source of microwave energy, e.g. a microwave generator, may introduce microwave energy through a waveguide into the reactor vessel from one or more entry ports located in the reactor vessel, to provide a heatable microwave zone in the reactor vessel. The waveguide may be arranged coaxial and radially external to and around the reactor vessel. The microwave energy may in particular operate in the range from about 300 MHz to about 3 GHz.

By way of yet another example, the reactor vessel may be tempered by induction heating. In this example, an electromagnetic induction field is provided via an induction coil to facilitate the depolymerization of the one or more condensation polymers in the starting material into their constituent monomers. It is in particular conceivable that the electromagnetic induction field is applied to the conveying means of the reactor vessel, wherein said conveying means couple with said electromagnetic induction field.

If the method disclosed herein uses a second vessel, this second vessel may also be temperature controlled, i.e. tempered. The means for tempering the reactor vessel described above are also suitable for tempering the second vessel. The reactor vessel and the second reactor may share the means, i.e. use them jointly. Preferably, however, the reactor vessel and the second vessel each comprise their own means for temperature control, i.e. the reactor vessel and the second vessel may be heated and cooled independently from each other.

In a preferred embodiment of the method disclosed herein, the method is carried out as a continuous process. In contrast to batchwise processing, the operational advantages of the process are particularly pronounced in a continuous process, because this avoids periodic cooling of the reaction vessel to relatively low temperatures, for example to room temperature, and subsequent heating of the reaction vessel to relatively high temperatures, amongst others.

In a preferred embodiment of the method disclosed herein, the starting material, the depolymerization agent and the polyhydric alcohol are added to the reactor vessel separately. Put differently, the aforementioned components are added to the reaction vessel via dedicated means for adding the respective component, or via shared means but one after the other. Means and shared means for adding the starting material, the depolymerization agent and the polyhydric alcohol may in particular be selected from vertical or lateral feed ports, gravimetric or volumetric dosing systems, metering pumps, liquid dosing pumps and injectors, depending on whether the respective component to be added is a liquid or a solid, as will be understood by the person skilled in the art. This embodiment of the method is made possible by the fact that all the components used in the method described herein are solids, and the method and the apparatus required for performing it can thus be carried out more simply or with less constructional effort than in the known prior art.

In a further, even more preferred alternative embodiment of the method disclosed herein, the stating material, the depolymerization agent and the polyhydric alcohol are added to the reactor vessel in the form of a premix containing two or more of the components of the reaction mixture. In this alternative, it is particularly advantageous if the starting material and the depolymerization agent are added in premixed form, i.e. placed together in the reaction vessel. Surprisingly, it has been found that this can increase the conversion of the depolymerization. Without wishing to be bound by theory, it is currently assumed that, when these components are added simultaneously to the reactor vessel, both components are co-comminuted and sheared during kneading, mixing, conveying or recirculation so that the starting material softens and settles around the depolymerization agent, which does not melt at the temperatures in the reactor vessel. By this intimate mixing of the starting material and the depolymerization agent, the surface reactivity is increased and saponification under essentially anhydrous conditions facilitated. In addition, when using an extruder as reactor vessel, the required screw length or extruder length can be shorted by using a premix as described above because the extruder section which would otherwise be used for blending these constituents of the reaction mixture may be omitted.

In a preferred embodiment of the method disclosed herein, the depolymerization agent and the polyhydric alcohol are added to the reactor vessel at separate locations of the reactor vessel. This ensures that the reaction of the starting material with the depolymerization agent has progressed sufficiently far beforehand, and that the depolymerization can thus be carried out in a more controlled and complete manner.

In a preferred embodiment of the method disclosed herein, the reactor vessel is a twin-screw extruder or a mixing and kneading machine. In a twin-screw extruder, the materials are mixed and at the same time pressurized by two screws that turn within a barrel heated to a predefined temperature. The length of the screws is designed according to reaction condition requirements such as the needs of a feeding zone, a mixing zone, a reaction zone, a high-pressure zone, a vacuum zone, an exhausting zone and/or a metering extrusion zone, as will be understood by the person skilled in the art. The materials are extruded in the form of a strand from an extrusion orifice in the die plate located at the outlet of the extruder. A kneading machine, also known as "kneading extruder", includes a set of counter-rotating kneading blades and a discharge screw. The blades are mounted on a horizontal axis in a U-shaped trough. Below the blades in a separate cavity is the discharge screw. During the mixing cycle the blades rotate toward each other while the mixing constantly feeds new materials into the mixing blades. After the mixing/kneading cycle is complete, the screw directions are reversed to extrude the finished product from the mix zone out through a discharge die and on to further processing. Another specific example of a kneading machine that may preferably be used as the reactor vessel is a BUSS^{®}-type co-kneader. Such machines are characterized by an operation which features simultaneous rotation and axial oscillation of a mixing and kneading screw shaft, i.e. the conveying means, featuring kneading flights. The oscillating screw shaft ensures intensive material exchange in an axial direction by multiple splitting, folding and reorientation of the reaction mixture or product mixture, respectively. The kneading flights of the screw shaft interact with stationary kneading pins, which accounts for an effective mixing.

Both of the above apparatuses, i.e. a twin-screw extruder and a kneading extruder, are particularly well suited for carrying out the method disclosed herein, because they allow harsh processing with kneading, mixing, conveying and recirculation of the components provided in method steps a) through c), which allows for the depolymerization to be greatly accelerated and is advantageous for the conversion of the depolymerization and the yield of monomers or derivatives thereof obtainable from the depolymerization, respectively. A BUSS^{®}-type co-kneader is particularly effective if the proportion of depolymerization agent and/or polyhydric alcohol is high compared to the starting material. It provides for an excellent distributive mixing effect and an optimal distribution of the raw materials. The oscillating screw shaft motion allows for a particularly short processing length. The object is further achieved by an apparatus for depolymerizing condensation polymers. The apparatus comprises a reactor vessel with conveying means, means for tempering contents located in the reactor vessel, and an outlet for discharging at least part of the reaction mixture after depolymerization. The apparatus further comprises means for supplying a solid starting material containing at least one condensation polymer into the reactor vessel, means for supplying a substantially anhydrous solid depolymerization agent for said condensation polymer into the reactor vessel, and means for supplying a polyhydric alcohol having at least three hydroxyl groups per molecule into the reactor vessel. The conveying means are configured to at least one of knead, mix, convey, and recycle a reaction mixture in the reactor vessel. The conveying means of the reactor vessel may in particular be at least one screw-like member rotatable about its longitudinal axis.

Such an apparatus makes it possible to carry out the process described herein, with the advantages mentioned for the respective embodiments.

In particular, the apparatus disclosed herein is for carrying out a method as disclosed herein.

In a preferred embodiment of the apparatus disclosed herein, the reactor vessel is a twin-screw extruder with an extrusion tube having a length (L) and a diameter (D). Preferably, the ratio of length to diameter (L/D) is 40 or less, more preferably approximately 32.

The design of the reaction vessel as a twin-screw extruder with relatively short screw lengths enables short residence times of the reaction mixture in the extruder and fast execution of the depolymerization while requiring little space for the extruder.

In a preferred embodiment of the apparatus disclosed herein, the reactor vessel is a twin-screw extruder with a melt pump arranged at the outlet of the twin-screw extruder. The melt pump (or gear pump) allows to precisely control the output to the die and eliminates surging of the extruder screw. Furthermore, it reduces back pressure and increases output of the extruder.

Melt pumps typically comprise two gear wheels, usually driven by a single motor, which mate with each other when they rotate. The extruder fills the gears from the suction side, and the rotating gears discharge the polymer on the other side. The principle is that a well-made gear will have a very accurate profile, and when that gear is enclosed in a tight-fitting housing, the volume of material in each tooth can be very precise and near-constant. As the gears turn they meter an exact amount of plastic on the discharge side. The speed of the gear rotation is closely controlled by an AC or DC drive designed for low variation, for example less than 1% variation.

The gear design itself may, for example, be helical, spur or herringbone. A helical gear design was found to be suitable for most applications and ensures a continuous and smooth process. In addition, the helical gear design features less friction and has better self-cleaning characteristics compared to the two other gear designs. As will be known to the person skilled in the art, the melt pump should to be chosen depending on various criteria, such as desired throughput (kg/h), the type of starting material, filler content (kind of filler and percentage), and pressure range.

In a preferred embodiment of the apparatus disclosed herein, the reactor vessel is a twin-screw extruder with a melt pump arranged at the outlet of the twin-screw extruder and a die plate arranged at the end of the twin-screw extruder. The die plate features a band-configuration. For a 40 mm diameter twin-screw extruder, the band may be a hole of 3.5 x 80 mm in the die plate.

In a preferred embodiment of the apparatus disclosed herein, the apparatus further comprises a second vessel that is downstream connected to the outlet of the reactor vessel. The second vessel comprises means for conveying contents located in the second vessel and means for tempering contents located in the second vessel. In addition to carrying out the actual depolymerization, such an apparatus also allows the product mixture obtained from the depolymerization reaction in the reaction vessel to be worked up or processed further.

The conveying means of the second vessel may in particular be at least one stirrer, such as an axial or radial stirrer. In order to prevent the product mixture from rotating with the stirrer and the resulting formation of vortices, obstacles may be installed on the second vessel's interior wall. These so-called "baffles" improve mixing at the same stirrer power. In general, stirrer selection depends on the stirring task, the viscosity of the medium, the desired shear strength, or on which stirrer power is available, as will be understood by the person skilled in the art.

In a preferred embodiment of the apparatus disclosed herein, the apparatus additionally comprises means for separating at least one of the monomeric components of the condensation polymer, or derivatives of said monomeric components, from the depolymerization agent and from the polyhydric alcohol during and/or after depolymerization from the reactor vessel. This way, monomers and/or derivatives thereof may be separated from the product mixture in the reactor vessel.

In particular, the means for separating at least one of the monomeric components of the condensation polymer, or derivatives of said monomeric components, from the depolymerization agent and from the polyhydric alcohol during and/or after depolymerization are means for removing gases from the reactor vessel. In the gaseous state, monomers and/or derivatives thereof may be separated from the product mixture in the reactor vessel particularly easily.

Additionally or alternatively, the apparatus disclosed herein further comprising a second vessel may also comprise means for separating at least one of the monomeric components of the condensation polymer, or derivatives of said monomeric components, from the depolymerization agent and from the polyhydric alcohol during and/or after depolymerization from the second vessel. This way, any monomers still remaining in the product mixture can be separated from the product mixture in the second vessel.

In particular, the means for separating at least one of the monomeric components of the condensation polymer, or derivatives of said monomeric components, from the depolymerization agent and from the polyhydric alcohol during and/or after depolymerization are means for removing gases from the second vessel.

The object is further achieved by the use of an apparatus as disclosed herein for performing a method as disclosed herein.

The invention is further explained in more detail by means of figures, in which like reference numerals are used to refer to the same or similar elements:
- Fig. 1:: Schematic illustration of an embodiment of a method for depolymerizing a condensation polymer as disclosed here-in;
- Fig. 2:: Schematic illustration of an embodiment of an apparatus as disclosed herein.

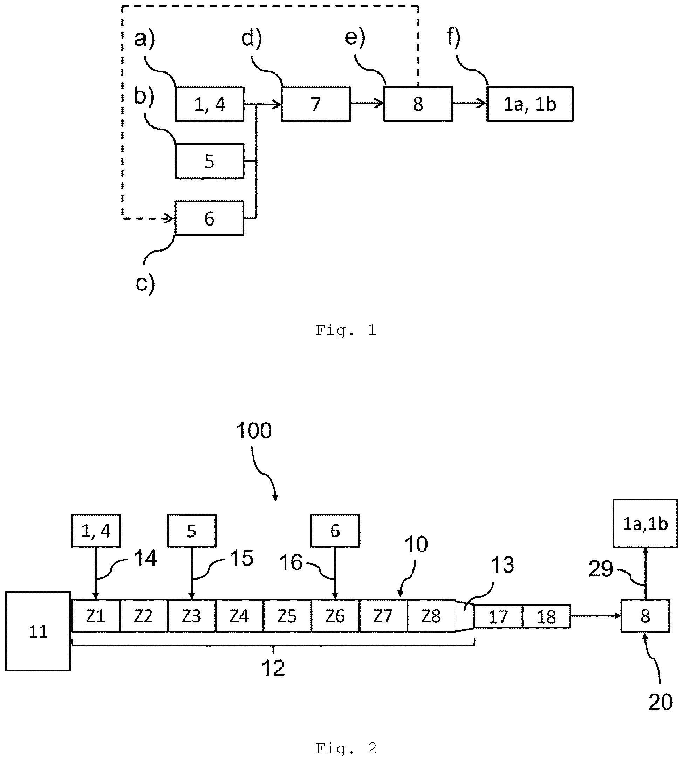

Figure 1 shows a schematic overview of an exemplary embodiment of the method disclosed herein. In step a), starting material 4 is provided in the form of plastic bottle waste containing poly(ethylene terephthalate) (PET) as condensation polymer 1. Preferably, the PET bottles are first mechanically reduced in size by, for example, grinding, chopping, tearing and/or cutting in a suitable equipment, e.g. a shredder. The bottles' non-polyester components, in particular polyolefins such as HDPE that are used for bottle caps, do not need to be separated from the polyester and can be fed to the reactor vessel as such since they do not interfere with the depolymerization method disclosed herein. The starting material 4 is placed in the hopper of a twin-screw extruder (not shown) serving as the reactor vessel as will be further described in Fig. 2 below. In step b), sodium hydroxide is provided as depolymerization agent 5. The sodium hydroxide is provided in pellet form, i.e. as a substantially anhydrous solid. In step c), glycerol is provided as polyhydric alcohol 6. Glycerol has three hydroxyl groups per molecule. In step d), the PET bottle scrap, sodium hydroxide and glycerol are added to the twin-screw extruder, as will be described in more detail for Fig. 2, to obtain a reaction mixture 7 consisting of the aforementioned components 4, 5 and 6. The reaction mixture 7 is depolymerized in step e) under the kneading and mixing action of the extruder's screws. After a predetermined time of a few minutes, in particular of about one minute, the product mixture 8 thus obtained is conveyed out of the twin-screw extruder and into a separate vessel (not shown), as will be further described in Fig. 2 below. In the case of PET depolymerization, the product mixture 8 comprises ethylene glycol 1a as a monomeric component and disodium terephthalate 1b as a derivative of a monomeric component of PET, sodium hydroxide, glycerol as well as low molecular esters from the transesterification of glycerol with PET oligomers. Finally, in step f), the ethylene glycol 1a is separated from the sodium hydroxide 5 and from the glycerol 6. Due to the difference in their respective boiling points, ethylene glycol (b.p. approx. 197 °C) and glycerol (b.p. approx. 290 °C) may be separated from one another and from the solid or higher-boiling residue by evaporation under reduced pressure. Glycerol may be re-used in the method, as indicated by the dashed arrow in Fig. 1. It is also conceivable that the depoly-merisation is carried out under conditions at which at least one of the monomeric components 1a, 1b formed is extracted from the reaction mixture 7. This can take place by passing a gas through during the reaction, for example nitrogen or air. Additionally or alternatively, at least one of the monomeric components 1a, 1b formed bay be extracted from the reaction mixture 7 under reduced pressure. In the present example, ethylene glycol 1a formed during the depolymerization reaction in step e) may be removed in a stream of nitrogen passing through the extruder barrel put under reduced pressure.

Figure 2 shows a schematic illustration of an apparatus 100 for depolymerizing polymers as disclosed herein. The apparatus 100 comprises a reactor vessel 10 in the form of a twin-screw extruder with an extruder barrel having a length-over-diameter ratio of approximately 32. The twin-screw extruder comprises two screws (not shown) driven by a drive and a transmission as conveying means 11. The screws of the twin-screw extruder 10 may in particular be operated at a speed of between 200 and 600 RPM. The torque may in particular be between 60% and 80%. The twin-screw extruder 10 further comprises means 12 for tempering contents located in the twin-screw extruder 10. In the example illustrated in Fig. 2, the means 12 comprise a heating device arranged around the extruder barrel in which a thermal oil can be circulated, the heating device dividing the extruder barrel into eight zones Z1-Z8 with different temperatures. It is conceivable, for example, that the temperature of the individual zones - indicated from Z1 to Z8 - is 130 °C, 130 °C, 110 °C, 110 °C, 90°C, 90 °C, 80 °C, and 80 °C. The twin-screw extruder 10 shown in the example of Fig. 2 further comprises an outlet 13 which is downstream connected to a melt pump 17, which allows for a controlled and stable pressure of the extruded product mixture. The pump can also be tempered, for example to about 70 °C. A die plate 18 is arranged downstream of the melt pump 17. In the example shown in Fig. 2, the die plate 18 features a band-configuration dimensioned as a 3.5 x 80 mm sized hole and is tempered to about 70 °C. The apparatus 100 further comprises means 14 for supplying a solid starting material 4 containing at least one condensation polymer 1 into the twin-screw extruder 10. The means for supplying the solid starting material may in particular be a hopper. Moreover, the apparatus 100 comprises means 15 for supplying a substantially anhydrous solid depolymerization agent 5 for said condensation polymer 1 into the twin-screw extruder 10. In particular, the substantially anhydrous solid may be introduced in the twin-screw extruder by a side feeder, in particular in section Z3 shown in Fig. 2. Lastly, the apparatus 100 comprises means 16 for supplying a polyhydric alcohol 6 having at least three hydroxyl groups per molecule into the twin-screw extruder 10. Depending on the aggregate state of the polyhydric alcohol used, the means 16 may be a liquid injection feeder or a side feeder for solids. The means for supplying a polyhydric alcohol into the reactor vessel may be heated. The conveying means 11 of the twin-screw extruder 10 are configured to knead, mix, convey, and recycle the reaction mixture present in the twin-screw extruder 10. The apparatus 100 of the present example further comprises a stirred reactor 20 as second vessel that is downstream connected to the outlet 13 of the twin-screw extruder 10. The stirred reactor 20 comprises an agitator 21 as means for stirring contents located in the stirred reactor 20 and means 22 for tempering contents located in the stirred reactor 20. The product mixture 8 obtained after the depolymerization described under Fig. 1 is transferred to the stirred reactor 20 where ethylene glycol 1a is separated from the product mixture 8 by means 29 for removing gases from the stirred reactor 20. In particular, the ethylene glycol 1a can be separated from the product mixture 8 by techniques such as distillation, steam distillation and vacuum distillation. The distillation can take place in one or more steps. The remaining monomeric components or derivatives thereof may be separated from the remaining product mixture 8 via recrystallisation or other common purification techniques. In case that the depoly-merisation reaction has not proceeded to completion, separation of any oligomers still present in the product mixture 8 from the monomeric components of the polyester can also take place by means of cooling of the product mixture 8 or the addition of a non-solvent for the oligomers or the polyester. The oligomers will precipitate and the monomeric components can be separated by means of filtration.

## Claims

1. A method for depolymerizing a condensation polymer (1) into its monomeric components (1a, 1b) or derivatives thereof, the method comprising the steps:
a) Providing a solid starting material (4) containing at least one condensation polymer (1) to be depolymerized;
b) Providing a depolymerization agent (5) for said condensation polymer (1), wherein said depolymerization agent (5) is a substantially anhydrous solid;
c) Providing a polyhydric alcohol (6) having at least three hydroxyl groups per molecule;
d) Adding the starting material (4), the depolymerization agent (5) and the polyhydric alcohol (6) to a reactor vessel (10) to obtain a reaction mixture (7);
e) Depolymerizing the condensation polymer (1) by kneading and/or mixing and/or conveying and/or recycling the reaction mixture (7) in the reactor vessel (10) to obtain a product mixture (8);
f) Separating at least one of the monomeric components (1a, 1b) of the condensation polymer (1), or derivatives of said monomeric components, from the depolymerization agent (5) and from the polyhydric alcohol (6) during and/or after depolymerization step e).

2. The method according to claim 1, wherein the condensation polymer (1) is selected from the group consisting of polyesters, polyamides, polyurethanes and polycarbonates.

3. The method according to claim 2, wherein the polyester is at least one of polyethylene terephthalate, polybutylene terephthalate, polyethylene naphthalate, polycyclohexylenedimethylene terephthalate, polytrimethylene terephthalate, polylactic acid, polylactic acid, polybutylene succinate, polybutylene adipate terephthalate, and copolyesters of the aforementioned polyesters, preferably said polyester is at least one of polyethylene terephthalate, polybutylene terephthalate, polyethylene terephthalate/polybutylene terephthalate copolymer, polyethylene terephthalate copolymer, and polybutylene terephthalate copolymer.

4. The method according to claim 2, wherein the polyamide is at least one of polyamide 6, polyamide 6.9, polyamide 4.6, polyamide 5.6, polyamide 11, polyamide 12, polyamide 10.10, polyamide 6.6, and fully or partially aromatic polyphthalamide.

5. The method according to claim 2, wherein the polycarbonate is at least one of Bisphenol A-based polycarbonate and poly(propylene carbonate).

6. The method according to any one of the preceding claims, wherein no additional solvent, in particular no alkylene glycol and no water, is added to the reaction mixture (7) prior to step f).

7. The method according to any one of the preceding claims, wherein the depolymerization agent (5) is at least one compound selected from the group consisting of sodium hydroxide, potassium hydroxide, calcium hydroxide, magnesium hydroxide, sodium ethoxide, sodium carbonate, and hydrosilanes, preferably the depolymerization agent is sodium hydroxide.

8. The method according to any one of the preceding claims, wherein the depolymerization agent (5) is not a transition metal compound, in particular the depolymerization agent is not zinc acetate.

9. The method according to any one of the preceding claims, wherein the polyhydric alcohol (6) has between three and five hydroxyl groups per molecule, preferably the polyhydric alcohol (6) is selected from the group consisting of glycerol, diglycerol, triglycerol, pentaerythritol, dipentaerythritol, and sorbitol.

10. The method according to any one of the preceding claims, wherein the reaction mixture (7) is heated and/or cooled, in particular via means (12) for tempering the reactor vessel (10), to a temperature above the glass transition temperature (T_{g}) of the condensation polymer (1) to be depolymerized and below its melting temperature (Tₘ), preferably to a temperature between 60 °C and 250 °C, more preferably to a temperature between 120 °C and 160 °C.

11. The method according to any one of the preceding claims, wherein the method is carried out as a continuous process.

12. The method according to any one of the preceding claims, wherein the starting material (4), the depolymerization agent (5) and the polyhydric alcohol (6) are added to the reactor vessel (10) either separately or in the form of a premix containing two or more of the components (4, 5, 6) of the reaction mixture (7).

13. The method according to any one of the preceding claims, wherein the depolymerization agent (5) and the polyhydric alcohol (6) are added to the reactor vessel (10) at separate locations of the reactor vessel (10).

14. The method according to any one of the preceding claims, wherein the reactor vessel (10) is a twin-screw extruder or a mixing and kneading machine.

15. Use of an apparatus (100) comprising a reactor vessel (10) with conveying means (11), means (12) for tempering contents located in the reactor vessel (10), an outlet (13), means (14) for sup-plying a solid starting material (4) containing at least one condensation polymer (1) into the reactor vessel (10), means (15) for supplying a substantially anhydrous solid depolymerization agent (5) for said condensation polymer into the reactor vessel (10), and means (16) for supplying a polyhydric alcohol (6) having at least three hydroxyl groups per molecule into the reactor vessel (10), wherein the conveying means (11) are configured to knead and/or mix and/or convey and/or recycle a reaction mixture in the reactor vessel (10) for performing a method as claimed in any one of claims 1-14.
